(19) Europäisches Patentamt
European Patent Office
Office européen des brevets

(11) EP 0 571 898 B1

(12) EUROPEAN PATENT SPECIFICATION

(45) Date of publication and mention
of the grant of the patent:
**07.05.1997 Bulletin 1997/19**

(51) Int Cl.⁶: **H02J 13/00**, H02J 3/14,
H03K 17/18

(21) Application number: **93108248.1**

(22) Date of filing: **21.05.1993**

(54) **Low voltage power control breaker system**

Niederspannungsschaltersystem

Système disjoncteur basse tension

(84) Designated Contracting States:
**CH DE FR GB IT LI**

(30) Priority: **29.05.1992 ES 9201119**

(43) Date of publication of application:
**01.12.1993 Bulletin 1993/48**

(73) Proprietor: **ALCATEL STANDARD ELECTRICA,
S.A.**
**E-28045 Madrid (ES)**

(72) Inventors:
• **Alfonso Ronda, Jose Antonio**
**E-28044 Madrid (ES)**

• **Cid Vila, Ismael**
**E-28027 Madrid (ES)**

(74) Representative: **Pohl, Herbert, Dipl.-Ing. et al
Alcatel Alsthom,
Postfach 30 09 29
70449 Stuttgart (DE)**

(56) References cited:
**EP-A- 0 408 472**          **WO-A-88/10020**
**WO-A-92/05616**          **DE-A- 4 212 063**
**GB-A- 2 188 799**          **US-A- 4 216 384**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

OBJECT OF THE INVENTION

This invention concerns a low voltage power control breaker system that is of special application in low voltage electric power user distribution networks, and that can work with different overload curves with no need to carry out any physical change in the breaker system, and that can be operated remotely.

BACKGROUND TO THE INVENTION

At present, there exist power control breakers whose construction is based on a bimetal strip that generally operates according to a thermal trip curve or an overload curve fixed by the characteristics of the bimetal strip.

This curve is fixed for each power control breaker and is regulated by the VDEO660 and IEC292-1 standards. As this overload curve is fixed, when the user wishes to change his contracted power, which is equivalent to another overload curve, it is necessary for the electric utility, in order to continue limiting the maximum power usable by the customer, to physically replace the existing power control breaker with another prepared for the new power contracted, this forming a serious inconvenience.

The resetting of the present power control breakers can be done:

- manually, intervening directly on the device,
- automatically, by the cooling of the bimetal strip, or
- by means of an auxiliary contact, which can be accessed over two wires.

Consequently, the existing power control breakers cannot be operated on remotely by the electric utility, which also constitutes a serious inconvenience.

In the publication "Automática e Instrumentación", Reports 89/90, pages 227 to 245, different types of existing breakers are described, all presenting the inconveniences mentioned above.

TECHNICAL PROBLEM TO BE SOLVED

Thus, the technical problem to be overcome consists in making the power control breakers able to work with different overload curves with no need to carry out any physical change in the power control breaker, as well as to achieve that these can be operated remotely.

CHARACTERISATION OF THE INVENTION

To overcome the inconveniences mentioned above, the invention proposes the replacement of the bimetal device of the conventional power control breakers by an electronic control circuit that can be programmed remotely.

The invention is characterised in that it comprises a set of contactors connected to different low-voltage customers and a set of pulse reading modules connected to corresponding customer meters and to an instantaneous power calculating module, which collect the pulses provided by the different customer meters. The instantaneous power calculating module, also connected to a programmable overload curve module, calculates the instantaneous power demands of the different customers at every moment. The programmable overload curve module, which is also connected to a driver module and to a communications module, decides the status in which each of the contactors should be. The driver module is also connected to the communications module, to a push-switch status reading module and to the set of contactors, connected in turn to the different low voltage customer circuits, and enables or inhibits each of the contactors according to the commands received from the programmable overload curve module, from the communications module or from the push-switch status reading module, and also takes into account the state in which the different contactors are. The push-switch status reading module, that is also connected to a set of push-switches, reads the commands given locally through the push-switches. The communications module is connected, via a communications line, to a remote centre to which it transmits information on the status of the contactors and from which it receives commands to change the overload curve to use with any one of the contactors or to change the state of said contactor.

An additional characteristic of the invention is that the corresponding customer cannot close his contactor locally by means of the corresponding push-switch when the contactor is opened by a remote command coming through the communications module.

A further additional characteristic of the invention is that, when the contactor of a customer is opened locally as the result of a command transmitted through the corresponding push-switch, said contactor cannot be closed in response to a command received remotely through the communications module.

Consequently, by means of the invention, load control for various customers is centralised, permitting them to vary the power contracted with no need to carry out any physical change in the breakers.

Next, in order to make this description clearer, and forming an integral part thereof, a series of figures are attached in which by way of illustration, and in no way limiting, the object of the invention is shown.

BRIEF FOOTNOTES TO THE FIGURES

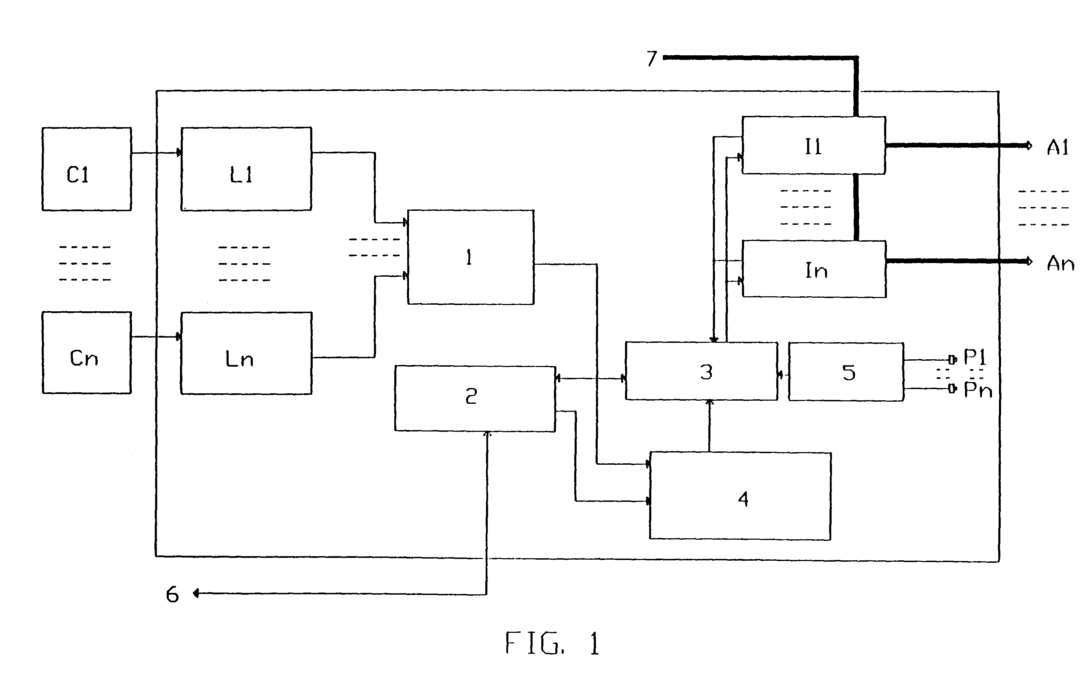

Figure 1 shows the functional block diagram of the low voltage power control breaker in accordance with the invention.

Figure 2 shows a power overload curve, the theoretical curve being the broken line and the approximate curve being the sections of continuous line, and illustrating the operation of the power control breaker of the invention.

## DESCRIPTION OF AN EXAMPLE OF IMPLEMENTATION OF THE INVENTION

Below a description of the invention based on the figures mentioned above is given.

It is common knowledge that the power consumed by each customer can be controlled by means of a meter Ci installed by the electric utility. After this meter is mounted the power control breaker by means of which a limit is put on the maximum power consumable, this power corresponding to that contracted by the customer.

The conventionally used meters are fitted with a pulse transmitter in accordance with the standard DIN 43864, or similar, whereby the frequency of the pulses emitted is a function of the consumption.

Each of the customer meters Ci is connected to a pulse reading module Li, and all of these are connected to an instantaneous power calculating module 1 which, in turn, is connected to a programmable overload curve module 4.

In addition, the invention has a communications module 2 that is connected to a communications line 6, and to the programmable overload curve module 4.

The communications line 6 can be formed by a dedicated pair or tie-line, an optical fibre, the low voltage network, a radiolink, etc., such that communication is possible between the breaker of the invention and a remote point where is located the control equipment that facilitates the control and programming of the breaker.

On the other hand, the communications module 2 is also connected to a driver module 3 which, in turn, is linked to a push-switch status reader module 5 and to as many contactors I1,..., In as there are customers.

The contactors I1,..., In perform the connection/disconnection between the low voltage network 7 and the low voltage line corresponding to the customer A1,..., An.

The pulse reading module Li connected to the corresponding meter Ci has the job of collecting the pulses generated by the meter to which it is connected.

The pulses collected by the pulse reading module Li are sent to the instantaneous power calculating module 1, which calculates the power required by the customer at each moment, as a function of the number of pulses detected per integration time interval.

The instantaneous power calculated for each customer is sent to the programmable overload curve module 4 which holds inside the overload curve for each of the subscribers, determining whether the instantaneous power demanded by each customer exceeds that contracted, and deciding the state in which each of the contactors I1, I2,..., In should be.

The overload curve for each customer can be programmed from a remote point that includes a control equipment connected to the communications line 6 and to the breaker of the invention through the communications module 2.

In addition, the driver module 3 is aware at all times of the state of each of the breakers I1,..., In, corresponding to the different customers, such that the remote control equipment has access to this information.

The information contained in the programmable overload curve module 4 is in the form of tables, mathematical formulae, electrical characteristics of mechanical or electronic components, or any other means, whereby this information can be modified exactly as has been already indicated, permitting a change to be made in the contracted power without it being necessary to alter any physical element.

Consequently, the programmable overload curve module 4 has the job of determining at what moment and based on what parameters a contactor cut-out is to be done, just as will be commented below.

If a contactor Ii is opened from the control equipment located at a remote point, the driver module 3 prevents the customer from being able to close the contactor locally by means of the corresponding push-switch Pi.

Likewise, if the customer locally opens his contactor Ii by means of the corresponding push-switch Pi, the driver module 3 prevents this contactor Ii from being closed from the control equipment located at the remote point.

The calculation of the instantaneous power is done from the constant associated with each meter Ci, which represents the power consumed for each pulse generated, such that the instantaneous power is obtained by dividing this constant by the time elapsing between two pulses.

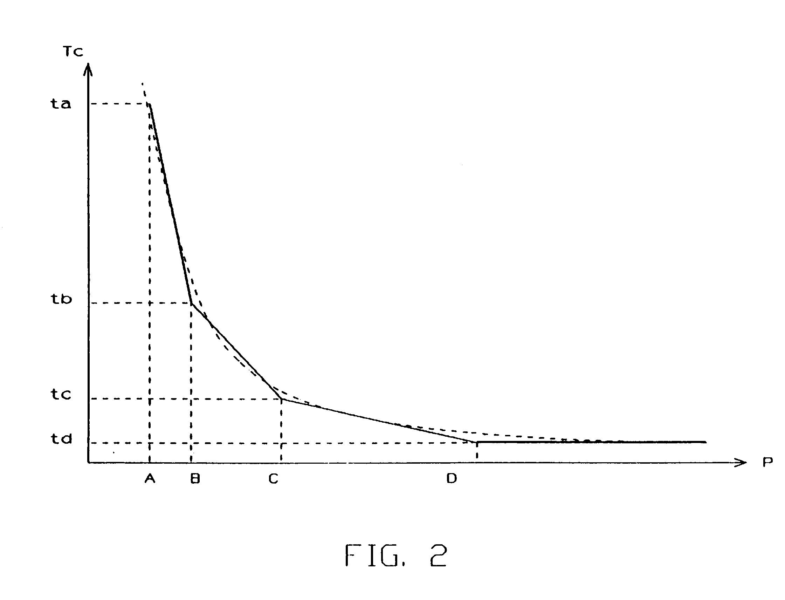

For each meter there is a power overload curve, like for example that shown in figure 2. This curve represents the cut-out time Tc, as a function of the instantaneous power.

For each power value above that is contracted, there is a corresponding fixed cut-out time. This time is the maximum for which this level of power can be allowed before the cut-out or opening of the corresponding contactor takes place.

The power requested P is sampled at fixed intervals of time $\delta t$. With each sample, the time, Tcut-out, until the cut-out or opening of the contactor takes place, is recalculated; the situation will be one of the following:

a) if $P_n \leq K*Pnominal$, then $Tcut\text{-}out_n = \infty$, where K is the permissible overload factor;
b) if $Tcut\text{-}out_{n-1} = \infty$ and $P_n > K*Pnominal$, then $Tcut\text{-}out_n = Tc(P_n)$, according to the curve of figure 2;
c) if the power requested was variable and greater than $K*Pnominal$, the time until cut-out takes place at instant n, is given by:

$$\text{Tcut-out}_n = (\text{Tcut-out}_{n-1} - \delta t)^* Tc(P_n)/Tc(P_{n-1});$$

d) if the power requested was constant and greater than K*Pnominal, the preceding expression simplifies to:

$$\text{Tcut-out}_n = \text{Tcut-out}_{n-1} - \delta t.$$

When, for any given customer, the cut-out time is equal to zero, the corresponding contactor Ii is opened through a command from the driver module 3. The time the contactor remains open is programmable. Once this time has elapsed, resetting happens automatically or the contactor stays open indefinitely, depending on the number of cut-outs that have already occurred.

## Claims

1. A low voltage power control breaker system comprising:

   - a set of contactors (I1, I2,..., In) connected to different low-voltage customers (A1, A2,..., An);
   - a set of pulse reading modules (L1, L2,..., Ln) connected to corresponding customer meters (C1, C2,..., Cn);
   - a set of push-switches (P1, P2,..., Pn);
   - a push-switch status reading module (5), connected, to the set of push-switches (P1, P2,..., Pn), which push-switch status reading module (5) reads the commands given locally through the push-switches (P1, P2,..., Pn);
   - an instantaneous power calculating module (1) which collects the pulses provided by the different customer meters (C1, C2,..., Cn) and constantly calculates the instantaneous power demands of the different customers;
   - a programmable overload curve module (4), connected to the instantaneous power calculating module (1), which programmable overload curve module (4) decides the status in which each of the contactors (I1, I2,..., In) should be;
   - a communications module (2), connected to the programmable overload curve module (4) and, via a communications line (6), to a remote centre to which it transmits information on the status of the contactors (I1, I2,..., In) and from which it receives commands to change the overload curve to use with any one of the contactors (Ii) or to change the state of said contactor; and
   - a driver module (3), connected to the programmable overload curve module (4), the communications module (2), the push-switch status reading module (5) and the set of contactors (I1, I2,..., In), which driver module (3) enables or inhibits each of the contactors (I1, I2,..., In) according to the commands received from the programmable overload curve module (4), the communications module (2) or the push-switch status reading module (5), and taking also into account the state in which the different contactors are.

2. A system according to claim 1, wherein a contactor (Ii) cannot be closed locally by means of the corresponding push-switch (Pi) when the contactor is opened by a remote command coming through the communications module (2).

3. A system according to claim 1, wherein when a contactor (Ii) is opened locally as the result of a command transmitted through the corresponding push-switch (Pi), said contactor cannot be closed in response to a command received remotely through the communications module (2).

## Patentansprüche

1. Niederspannungs-Leistungsschaltersystem, das folgendes umfaßt:

   - eine Gruppe von Schützen (I1, I2, ..., In), die mit verschiedenen Niederspannungsverbrauchern (A1, A2, ..., An) verbunden sind;

   - eine Gruppe von Impulslesemodulen (L1, L2, ..., Ln), die mit entsprechenden Verbraucherzählern (C1, C2, ..., Cn) verbunden sind;

   - eine Gruppe von Druckknopfschaltern (P1, P2, ..., Pn);

   - ein Druckknopfschalterzustand-Lesemodul (5), das mit der Gruppe von Druckknopfschaltern (P1, P2, ..., Pn) verbunden ist, wobei das Druckknopfschalterzustand-Lesemodul (5) die lokal über die Druckknopfschalter (P1, P2, .., Pn) gegebenen Befehle liest;

   - ein Momentanleistungsberechnungsmodul (1), das die von den verschiedenen Verbraucherzählern (C1, C2, ..., Cn) gelieferten Impulse erfaßt und den Momentanleistungsbedarf der verschiedenen verbraucher laufend berechnet;

   - ein programmierbares Überlastkurvenmodul (4), das mit dem Momentanleistungsberechnungsmodul (1) verbunden ist, wobei das programmierbare Überlastkurvenmodul (4) den Zustand bestimmt, in dem sich jedes der Schütze (I1, I2, ..., In) befinden sollte;

- ein Übertragungsmodul (2), das mit dem programmierbaren Überlastkurvenmodul (4) und über eine Übertragungsleitung (6) mit einem entfernten Zentrum verbunden ist, an das es Informationen über den Zustand der Schütze (I1, I2, ..., In) überträgt, und von dem es Befehle zur Änderung der mit einem beliebigen der Schütze (Ii) zu verwendenden Überlastkurve oder zur Änderung des Zustands des Schützes empfängt; und

- ein Treibermodul (3), das mit dem programmierbaren Überlastkurvenmodul (4), dem Übertragungsmodul (2), dem Druckknopfschalterzustand-Lesemodul (5) und der Gruppe von Schützen (I1, I2, ..., In) verbunden ist, wobei das Treibermodul (3) jedes der Schütze (I1, I2, ... In) entsprechend den von dem programmierbaren Überlastkurvenmodul (4), dem Übertragungsmodul (2) oder dem Druckknopfschalterzustand-Lesemodul (5) empfangenen Befehlen freigibt oder sperrt und auch den Zustand, in dem sich die verschiedenen Schütze befinden, berücksichtigt.

2. System nach Anspruch 1, wobei sich ein Schütz (Ii) mittels des entsprechenden Druckknopfschalters (Pi) nicht lokal schließen läßt, wenn das Schütz von einem über das Übertragungsmodul (2) kommenden Fernbefehl geöffnet wird.

3. System nach Anspruch 1, wobei, wenn ein Schütz (Ii) als Folge eines über den entsprechenden Druckkhopfschalter (Pi) übertragenen Befehls lokal geoffnet wird, das Schütz als Antwort auf einen über das Übertragungsmodul (2) empfangenen Fernbefehl nicht geschlossen werden kann.

## Revendications

1. Un disjoncteur à régulation de puissance basse tension comprenant:

    - un jeu de contacteurs (I1, I2, ..., In) reliés à différents clients (A1, A2, ..., An) requérant une puissance basse tension;

    - un jeu de modules de lecture d'impulsions (L1, L2, ..., Ln) reliés aux compteurs des différents clients (C1, C2, ..., Cn);

    - un jeu de boutons-poussoirs (P1, P2 ..., Pn);

    - un module de lecture de position avec bouton-poussoir (5) relié au jeu de boutons-poussoirs (P1, P2, ..., Pn). Ce module de lecture de position avec bouton-poussoir (5) lit les ordres donnés localement par le biais de ces boutons-poussoirs (P1, P2, ..., Pn);

    - un module de calcul de la puissance instantanée (1) qui recueille les impulsions fournies par les compteurs des différents clients (C1, C2, ..., Cn) et qui calcule en permanence les besoins en puissance instantanée de chaque client;

    - un module de courbe de surcharge programmable (4) relié au module de calcul de la puissance instantanée (1). Ce module de courbe de surcharge programmable (4) décide de la position de chaque contacteur (I1), I2, ..., In);

    - un module de communication (2), relié par le biais d'une ligne de communication (6) à un centre de contrôle à distance qui transmet les informations concernant la position des contacteurs (I1, I2, ..., In) et desquels il reçoit l'ordre de changer les courbes de surcharges à utiliser avec un contacteur (Ii) ou l'ordre de modifier la position de ce contacteur (Ii); et

    - un module d'entraînement (3) branché sur le module de courbe de surcharge programmable (4), sur le module de lecture de position avec bouton-poussoir (5) et sur les contacteurs (I1, I2, ..., In). Ce module d'entraînement (3) permet de déclencher ou d'arrêter chaque contacteur (I1, I2 ..., In) en fonction des ordres reçus par le module de courbe de surcharge programmable (4), le module de communication (2) ou le module de lecture de position avec bouton-poussoir (5) en tenant compte de la position de chaque contacteur.

2. Un système conforme à la revendication 1 par lequel un contacteur (Ii) ne peut être fermé localement par le biais du bouton-poussoir correspondant (Pi) lorsque le contacteur est ouvert par commande à distance par le biais du module de communication (2).

3. Un système conforme à la revendication 1 par lequel un contacteur (Ii) est ouvert localement par le biais d'un ordre émis par le bouton-poussoir correspondant (Pi), alors ce contacteur ne peut être fermé suite à une commande reçue à distance par le biais du module de communication (2).

FIG. 1

EP 0 571 898 B1

FIG. 2